# EUROPÄISCHE PATENTANMELDUNG

(11) **EP 1 741 674 A2**
(43) Veröffentlichungstag der Anmeldung: **10.01.2007**
(21) Anmeldenummer: 06450081.2
(22) Anmeldetag: 19.06.2006
(51) Int. Cl.: C02F 1/44

(54) **Verfahren zum Reinigen von Gegenständen und Reinigungssystem**

(30) Priorität: 28.06.2005 AT 10842005
(71) Anmelder: Seiler Verfahrenstechnik GmbH, 2500 Baden (AT)
(72) Erfinder: Arnberger, Peter, 2384 Breitenfurt (AT); Joksch, Martin, 2500 Baden (AT)
(74) Vertreter: Sonn & Partner Patentanwälte

(57) **Zusammenfassung**

Verfahren zum Reinigen von Gegenständen, insbesondere von Geschirr, Wäsche, Kraftfahrzeugen, sowie Reinungssystem mit einer Reinigungsstufe (1) und einer Spülstufe (2), wobei die zu reinigenden Gegenstände in der Reinigungsstufe (1) zunächst einer wässrigen Reinigungslösung ausgesetzt werden, und anschließend in der Spülstufe (2) mit Brauchwasser, insbesondere Trinkwasser, gegebenenfalls unter Zugabe von Spülmittel, gespült werden, welches von der Spülstufe (2) in die Reinigungsstufe (1) weitertransportiert wird, wobei die verbrauchte Reinigungslösung der Reinigungsstufe (1) gefiltert wird, inbesondere ultrafiltriert wird, und die filtrierte Reinigungslösung in die Reinigungsstufe (1) rückgeführt wird.

## Beschreibung

Die Erfindung betrifft ein Verfahren zum Reinigen von Gegenständen, insbesondere von Geschirr, Wäsche, Kraftfahrzeugen, mit einer Reinigungsstufe und einer Spülstufe, wobei die zu reinigenden Gegenstände in der Reinigungsstufe zunächst einer wässrigen Reinigungslösung ausgesetzt werden, und anschließend in der Spülstufe mit Brauchwasser, insbesondere Trinkwasser, gegebenenfalls unter Zugabe von Spülmittel, gespült werden, welches von der Spülstufe in die Reinigungsstufe weitertransportiert wird. Weiters betrifft die Erfindung ein Reinigungssystem zum Reinigen von Gegenständen, insbesondere von Geschirr, Wäsche, Kraftfahrzeugen, mit einer Reinigungsstufe und einer nachfolgenden Spülstufe, wobei in der Reinigungsstufe zumindest ein Reinigungsbehälter vorgesehen ist, der eine wässrige Reinigungslösung enthält, und in der Spülstufe zumindest ein Spülbehälter vorgesehen ist, in den Brauchwasser, insbesondere Trinkwasser, gegebenenfalls unter Zugabe von Spülmittel eingeleitet wird, und das Brauchwasser von der Spülstufe in die Reinigungsstufe weitertransportiert wird.

Bei verschiedenen Verfahren zum Reinigen von Gegenständen, insbesondere beim Geschirrspülen, wird einerseits eine alkalische, saure oder auf Enzymbasis funktionierende Wasch- bzw. Reinigungslösung eingesetzt, wobei die zu reinigenden Gegenstände anschließend mit reinem Wasser, welches vorzugsweise Trinkwasserqualität aufweist, gegebenenfalls unter Zugabe von Klarspülmitteln und auch anderen Additiven, gespült werden.

Bei derartigen Reinigungsverfahren bzw. -systemen, wie z.B. gewerblichen halb- oder vollautomatischen Geschirrspülmaschinen, wird das Wasser in einer an die Reinigungsstufe anschließenden Spülstufe zugeführt und anschließend entgegen der Förderrichtung der zu reinigenden Gegenstände weitergegeben. Demzufolge steigt der Verschmutzungsgrad in Richtung des Beginns des Reinigungsverfahrens bzw. der Aufgabeseite der zu reinigenden Gegenstände während des Betriebs ständig an. Üblicherweise wird bei derartig bekannten Reinigungssystemen so viel Wasser zugeführt wie in der Spülstufe verbraucht wird, wodurch die Maschinen in regelmäßigen Abständen entleert und frisch wiederbefüllt werden müssen.

Der Wasserverbrauch ist bei derartigen Reinigungsverfahren bzw. -systemen somit sehr hoch, da das in die Spülstufe eingebrachte Wasser in die Reinigungsstufe weitergegeben wird und das am Ende der Reinigungsstufe verschmutzte Wasser nicht mehr in die Spülstufe eingebracht werden kann.

Grundsätzlich ist es bereits bekannt, wässrige Abwasserlösungen zu filtrieren, insbesondere auch einer Ultrafiltration zu unterwerfen.

Aus der US 5 207 917 A ist ein Verfahren bzw. eine Vorrichtung zum Recycling von einer wässrigen Reinigungslösung bekannt, wobei diese zum Reinigen in Fertigungsbetrieben von Maschinenteilen oder Leiterplatten eingesetzt wird. Hierbei wird die Reinigungslösung mit Ölen, Fetten und anderen Verunreinigungen kontaminiert, welche mit Hilfe einer Ultrafiltration aus der Reinigungslösung gefiltert werden. Die gefilterte Reinigungslösung wird hierbei in einen Spülbehälter rückgeführt, wohingegen die ungefilterte Reinigungslösung einem Konzentrationsbehälter zugeführt wird. Demzufolge wird hier die ultrafiltrierte Reinigungslösung zum Spülen der zu reinigenden Gegenstände wieder verwendet, welches jedoch bei dem erfindungsgemäßen Verfahren nicht möglich ist, da hier insbesondere zur Reinigung von Geschirr lediglich Wasser mit Trinkwasserqualität in der Spülstufe einsetzbar ist. Um die am Ende der Reinigungsstufe anfallende Reinigungslösung demzufolge in die Spülstufe mit Trinkwasserqualität rückführen zu können, wäre eine Umkehrosmose erforderlich, welche nachteiligerweise jedoch energie- und kostenintensiv ist.

Aus der EP 636 401 A1 ist weiters eine andersartige Prozesswasser-Recycling-Anlage für Druckmaschinen bekannt, wobei hier keine Spül- und Reinigungsstufe vorliegt, sondern lediglich das Prozesswasser einer Druckmaschine einer Ultrafiltration unterworfen wird, um dieses in Filtrat und Konzentrat zu zerlegen. Das Filtrat wird sodann über eine Prozesswasser-Rückführleitung in das Prozesswasser-Aggregat rückgeführt, wohingegen das Konzentrat über eine Fluidleitung einem Arbeitsbehälter zugeführt wird.

Ein ähnliches Verfahren zur Behandlung von verunreinigten alkalischwässrigen Reinigungslösungen ist auch aus der EP 789 000 A1 bekannt, bei welchen die verbrauchte Reinigungslösung einer Druckmaschine einer Ultrafiltration zugeführt wird und anschließend wieder zu der Druckmaschine rückgeführt wird. Auch hier ist keine Spülstufe vorgesehen, in welcher die zu reinigenden Gegenstände von Brauchwasser, insbesondere Trinkwasser, gespült werden.

In der DE 42 189 58 A1 ist ein Verfahren zur Wiederverwendung von Spül- oder Reinigungsflüssigkeit bei Geschirrspülmaschinen oder Waschmaschinen beschrieben. Hierin wird zwar eine Spül-oder Reinigungsflüssigkeit genannt, diese Begriffe werden jedoch gleichbedeutend verwendet, so dass keine Unterscheidung zwischen einer Spülstufe, in welcher mit Brauchwasser gespült wird, und einer Reinigungsstufe geoffenbart ist. Vielmehr ist hierin lediglich eine Spülflüssigkeit gezeigt die in einem Spülbehälter aufgenommen ist und welche über eine Filtereinheit in einen gereinigten Flüssigkeitsteilstrom und einen verschmutzten Flüssigkeitsteilstrom aufgespalten wird. Der zunehmend verschmutzte Flüssigkeitsteilstrom wird gegebenenfalls verdampft bzw. verflüssigt und dem filtrierten Flüssigkeitsteilstrom wieder zugeführt. Zudem ist ein Vorratsbehälter gezeigt, in welcher der filtrierte Flüssigkeitsteilstrom zwischengespeichert werden kann, oder jedoch der Flüssigkeitsteilstrom zugeführt werden kann.

In der EP 578 006 A1 ist lediglich ein Verfahren zur Behandlung von verunreinigten alkalisch wässrigen Reinigungslösungen beschrieben. Hierbei wird die Reinigungslösung einem mehrstufigen Reinigungs- bzw. Filterprozess unterworfen, um die Reinigungslösung zum Spülen einsetzen zu können. Hierzu erfolgt zunächst eine mechanische Filtration, anschließend eine Ultrafiltration und abschließend eine Nanofiltration.

Ziel der vorliegenden Erfindung ist es demzufolge ein Verfahren bzw. ein Reinigungssystem der eingangs angeführten Art schaffen, bei welchem der Bedarf an Brauchwasser, insbesondere an Trinkwasser, reduziert wird.

Dies wird bei dem Verfahren der eingangs angeführten Art dadurch erzielt, dass die verbrauchte Reinigungslösung der Reinigungsstufe gefiltert wird, inbesondere ultrafiltriert wird, und die filtrierte Reinigungslösung in die Reinigungsstufe rückgeführt wird. Durch die Filtration, insbesondere Ultrafiltration, der verbrauchten Reinigungslösung nach der Reinigungsstufe kann diese - ohne die Reinigungslösung zu verschmutzen - wieder in die Reinigungsstufe rückgeführt werden, wodurch wiederum der Bedarf des in der Spülstufe eingebrachten, anschließend in die Reinigungsstufe weitertransportierten Brauchwassers wesentlich reduziert wird. Demzufolge wird der Gesamtbedarf an Brauchwasser wesentlich verringert, weil somit aufgrund der Rückführung der gefilterten Reinigungslösung in die Reinigungstufe wesentlich weniger Brauchwasser von der Spülstufe in die Reinigungsstufe transportiert werden muss und zudem ein vollständiges Entleeren einer zu stark verschmutzten Reinigungslösung nach einer gewissen Anzahl von Reinigungsgängen nicht erforderlich ist. Durch die Rückführung der Reinigungslösung wird somit im Wesentlichen eine Trennung des Reiniungslösungs-Kreislaufs von dem Spül- bzw. Brauchwasser(-Kreislauf) erzielt. Es ist somit lediglich zweckmäßig, geringe gegebenenfalls aus der Reinigungsstufe bzw. der Spülstufe ausgeschleuste Teilströme durch die Zuführung von Brauchwasser zu ersetzen.

Um die zu reinigenden Gegenstände zunächst der Reinigungsstufe und anschließend automatisch einer - örtlich getrennten - Spülstufe zuzuführen, ist es günstig, wenn die zu reinigenden Gegenstände von der Reinigungsstufe in die Spülstufe gefördert werden. Selbstverständlich können die zu reinigenden Gegenstände auch stationär verbleiben, wobei in diesem Fall ein Umschalten zwischen der Zufuhr von Reinigungslösung und der anschließenden Zufuhr von Brauchwasser, insbesondere Trinkwasser, erfolgt.

Hinsichtlich eines zuverlässigen, einfachen Weitertransports des Brauchwassers von der Spül- in die Reinigungsstufe, ist es vorteilhaft, wenn das Brauchwasser von der Spülstufe in die Reinigungsstufe kaskadisch weitertransportiert wird.

Um den Verbrauch von Brauchwasser, insbesondere von Trinkwasser, weiter zu reduzieren, ist es günstig, wenn Abwasser, das in der Spülstufe anfällt, zu Brauchwasser, insbesondere Trinkwasser, aufbereitet wird, und in die Spülstufe rückgeführt wird. Da das Brauch- bzw. Trinkwasser beim Spülen lediglich geringfügig mit der aus der Reinigungsstufe mitgeschleppten Reinigungslösung versetzt wird, kann dieses - im Gegensatz zu der verbrauchten Reinigungslösung der Reinigungsstufe - auf einfache Weise zu Brauch- bzw. Trinkwasser aufbereitet werden, und sodann durch die Rückführung in die Spülstufe ebenfalls wiederverwendet werden. Zudem kann durch die Kreislaufführung die Menge an verschmutzem, aggresivem, in die Kanalisation abgeleitetem Abwasser wesentlich verringert werden.

Insbesondere bei der Reinigung von Geschirr, bei welcher Abwasser der Spülstufe durch die aus der Reinigungsstufe mitgeschleppte Natronlauge geringfügig verschmutzt wird und bei welcher der Gebrauch von Trinkwasser zum Spülen vorgeschrieben ist, ist es günstig, wenn das Abwasser zur Aufbereitung auf Trinkwasserqualität vor dem Rückführen in die Spülstufe, z.B. mittels gasförmigem CO₂, neutralisiert wird.

Um eine Übersalzung des rückgeführten Abwassers zu vermeiden, ist es von Vorteil, wenn das Abwasser teilweise aus der Abwasser-Rückführleitung ausgeschleust wird.

Um insbesondere Mikroorganismen, Viren und Pilze in dem rückgeführten Abwasser abzutöten, ist es günstig, wenn das Abwasser vor dem Rückführen in die Spülstufe mittels UV-Bestrahlung desinfiziert wird.

In zahlreichen Anwendungsfällen, z.B. beim Reinigen von Geschirr, ist es günstig, wenn das Brauchwasser, insbesondere Trinkwasser, vor einem Einbringen in die Spülstufe, vorzugweise auf über 60°C, inbesondere auf im Wesentlichen 85°C, erhitzt wird, wobei durch die Rückführung des Abwassers in die Spülstufe des noch warmen Abwassers der Energiebedarf zum Erhitzen des Trinkwassers vor Einbringen in die Spülstufe wesentlich reduziert wird.

Insbesondere zum Reinigen von Geschirr ist es vorteilhaft, wenn als wässrige Reinigungslösung eine alkalische, saure oder auf Enzymen basierende Lösung vorgesehen ist, wobei es hier ebenfalls günstig ist, wenn die Reinigungslösung einen pH-Wert größer 10, vorzugsweise von im Wesentlichen 12, aufweist.

Um eine zu hohe Konzentration der Reinigungslösung im Retentat zu vermeiden, ist es günstig, wenn das Retentat der Filtration im Kreis geführt wird und teilweise ausgeschleust wird, wobei jedoch zumindest 95% der gefilterten Reinigungslösung ohne die Zugabe von artfremden oder teuren Chemikalien in die Reinigungsstufe rückgeführt werden können. Das ausgeschleuste Konzentrat kann hierbei über herkömmliche Entsorgungswege (z.B. Küchenabfall, Ablauf, oder dergl.) entsorgt werden.

Zur Bereinigung der Reinigungslösung von Mikroorganismen, Viren, Pilzen und dergleichen, ist es von Vorteil, wenn die in der Reinigungungsstufe verbrauchte Reinigungslösung vor dem Rückführen in die Reinigungsstufe mittels UV-Bestrahlung desinfiziert wird.

Um den Gehalt organischer Kohlenstoffe in der Reinigungslösung zu reduzieren, ist es von Vorteil, wenn der in der Reinigungungsstufe verbrauchten Reinigungslösung vor dem Rückführen in die Reinungungsstufe zur Verringerung des TOC(Total Organic Carbon)-Gehalts Ozon zugeführt wird.

Das Reinigungsystem der eingangs angeführten Art ist dadurch gekennzeichnet, dass die Reinigungsstufe eine Reinigungslösung-Rückführleitung aufweist, in der eine Filtervorrichtung, insbesondere ein Ultrafilter, vorgesehen ist, wobei die Reinigungslösung-Rückführleitung an die Permeatseite der Filtervorrichtung angeschlossen ist und mit dem Reinigungsbehälter in Verbindung ist. Ebenso wie bei dem bereits vorstehend beschriebenen erfindungsgemäßen Verfahren kann durch die Rückführung der filtrierten Reinigungslösung der Bedarf an Brauchwasser wesentlich reduziert werden, so dass zwecks Vermeidung von Wiederholungen auf vorstehende Ausführungen verwiesen wird.

Um bei örtlich voneinander getrennten Reinigungs- und Spülstufen ein automatisches Überführen der zu reinigenden Gegenstände von der Reiniungsstufe in die Spülstufe zu erzielen, ist es günstig, wenn eine Fördereinrichtung zum Transport der zu reinigenden Gegenstände von der Reinigungsstufe in die Spülstufe vorgesehen ist. Wie im Zusammenhang mit dem vorstehend beschriebenen Verfahren bereits erwähnt, können die zu reinigenden Gegenstände jedoch auch stationär verbleiben und lediglich die Brauchwasser-Zufuhr aus dem Spülbehälter zeitlich an die Reinigungslösungs-Zufuhr anschließen.

Wenn der Spülbehälter und der Reinigungsbehälter über einen Überlauf in Verbindung stehen, ist auf konstruktiv einfache Weise der Weitertransport des Brauch- bzw. Trinkwassers von der Spülstufe in die Reinigungsstufe gewährleistet.

Eine weitere Reduktion des Brauch- bzw. Trinkwasserbedarfs kann erzielt werden, wenn die Spülstufe eine Abwasser-Rückführleitung zum Zurückführen von zu Brauchwasser, insbesondere Trinkwasser, aufbereitetem Abwasser in den Spülbehälter aufweist.

Wenn die Reinigungsstufe mehrere hintereinander angeordnete Reinigungsbehälter aufweist, wobei die Reinigungslösung-Rückführleitung in Förderrichtung gesehen mit dem letzten Reinigungsbehälter in Verbindung steht, kann die gefilterte Reinigungslösung bei mehreren Reinigungsbehältern von dem Reinigungsbehälter, dem es zugeführt wird, zu den weiteren kaskadisch weiter transportiert werden.

Tests haben gezeigt, dass es zur Filtrierung der Reinigungslösung insbesondere günstig ist, wenn die Filtervorrichtung zumindest eine organische oder anorganische Membran aufweist, vorzugsweise mit einer Membranschicht aus Zirkonoxid oder Titanoxid auf einem Trägermaterial, das insbesondere aus Carbon oder Aluminiumoxid, insbesondere α- Aluminiumoxid, besteht.

Eine besonders gute Filtrierung der Reinigungslösung ergibt sich, wenn zumindest eine Membranschicht rohrförmig mit einem Innendurchmesser von 2 bis 17 mm, vorzugsweise von im Wesentlichen 6 mm, oder kreissegmentförmig mit einer entsprechenden Querschnittsfläche ist. Üblicherweise sind hierbei mehrere segment- oder rohrförmige Membranschichten in einem gemeinsamen Filterelement zusammengefasst.

Zur Ausfilterung von insbesondere bei der Reinigung von Geschirr anfallenden Verschmutzungen ist es günstig, wenn die Filtervorrichtung eine Trenngrenze von 5000 bis 150000 Dalton, vorzugsweise von im Wesentlichen 50000 Dalton aufweist.

Um grobe Verschmutzungen vor dem Eintritt in die Filtervorrichtung auszusieben, ist es von Vorteil, wenn einem Umlauftank zumindest ein Schmutzsieb, insbesondere zwei parallel zueinander angeordnete, wahlweise durchströmte Schmutzsiebe, vorgeschaltet ist bzw. sind.

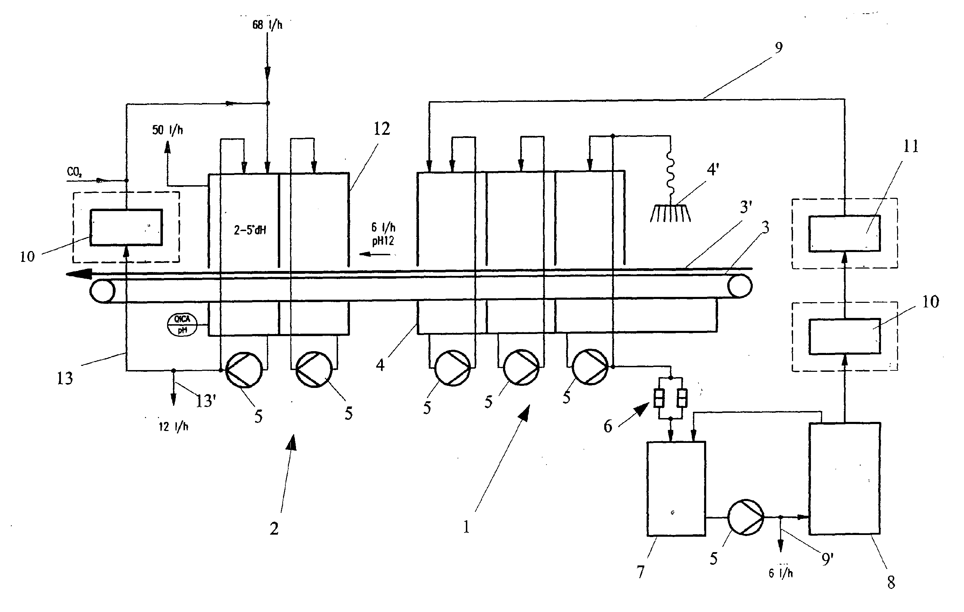

Die Erfindung wird nachstehend anhand von einem in der Zeichnung dargestellten bevorzugten Ausführungsbeispiel, auf das sie jedoch nicht beschränkt sein soll, noch näher erläutert. In der einzigen Zeichnungsfigur ist eine schematische Darstellung eines Reinigungssystems zur Reinigung von Geschirr gezeigt.

In der Fig. ist ein Reinigungssystem zum Reinigen von Geschirr mit einer Reinigungsstufe 1 und einer Spül- bzw. Klarspülstufe 2 gezeigt. Bei dem hier gezeigten Ausführungsbeispiel handelt es sich um eine so genannte 300 1/h-Anlage, bei welcher ein Flüssigkeits-Massenstrom von ca. 300 1/h die Maschine durchläuft, wie dies bei typischen Band- oder Korb-Geschirrspülmaschinen zutreffend ist.

Hierbei ist ein Förderband 3 zum Transport des zu reinigenden Geschirrs in Förderrichtung 3' vorgesehen. Das verschmutzte Geschirr durchläuft zunächst drei hintereinander angeordnete Reinigungsbehälter 4. Zudem ist in der Reinigungsstufe 1 eine Handbrause 4' ersichtlich.

Die in den Reinigungsbehältern 4 vorliegende Reinigungslösung mit einem pH-Wert 12 wird mit Hilfe von Pumpen 5 umgewälzt und zwischen den Reinigungsbehältern 4 durch einen Überlauf kaskadisch weiter transportiert. Die aus dem in Förderrichtung 3' gesehen ersten Reinigungsbehälter 4 austretende Reinigungslösung wird zunächst in einer Siebvorrichtung 6 gesiebt, welche zwei parallel zueinander angeordnete umschaltbare Schmutzsiebe aufweist.

Die gesiebte Reinigungslösung wird sodann einem Umlauftank 7 zugeführt, von wo sie über eine Pumpe 5 einer Ultrafiltrations-Vorrichtung 8 zugeführt wird. Zur Ultrafiltration werden bevorzugt Filter mit einer Trenngrenze von ca. 50000 Dalton eingesetzt, wobei anorganische Membranen in der Form von parallel zueinander angeordneten rohrförmigen Membranschichten vorgesehen sind, deren Innendurchmesser ca. 6 mm beträgt. Derartige Membranen sind mit Titanoxid oder Zirkonoxid beschichtet. Die gereinigte Reinigungslösung (Permeat, Filtrat) wird dann über eine Reinigungslösung-Rückführleitung 9 in die Reinigungsstufe 1, nämlich zu dem in Förderrichtung 3' gesehenen letzten Reinigungsbehälter 4 zurückgeführt.

Das Retentat/Konzentrat wird in den Umlauftank 7 geleitet und mit der übrigen Reinigungslösung vermischt. Ein Teilstrom 9' wird ausgeschleust, wobei jedoch ca. 95-98% der Reinigungslösung wieder verwendet werden können und anwendungsspezifische, unverbrauchte Spülchemikalien erhalten bleiben.

Zur Desinfektion der Reinigungslösung kann eine UV-Bestrahlungsvorrichtung 10 vorgesehen sein und zur Reduzierung der organischen Kohlenwasserstoff-Verbindungen eine Ozon-Bestrahlungsvorrichtung 11.

Die Spülstufe 2 weist zwei Spülbehälter 12 auf, in welche auf ca. 85°C erhitzes Trinkwasser eingebracht wird. Den Spülbehältern 12 ist jeweils eine Pumpe 5 zugeordnet , wobei auch hier der Transport zwischen den Spülbehältern 12 über einen kaskadischen Überlauf erfolgt. Um den Trinkwasser- und Energieverbrauch weiter zu reduzieren, ist eine Abwasser-Rückführleitung 13 vorgesehen, über welche das geringfügig verunreinigte noch heiße Trinkwasser in die Spülstufe 2 rückgeführt wird. Um das vor dem Einbringen in die Spülstufe 2 aufwendig auf eine Härte von 2 bis 5 °dH aufbereitete Abwasser wieder auf Trinkwasserqualität aufzubereiten, wird dieses beispielsweise durch die Zugabe eines Wasserneutralisationsmittels, z.B. von gasförmigen CO₂, neutralisiert. Sofern dem Trinkwasser Klarspülmittel zugegeben wurde, verbleibt dieses bei der Rückführung in der Spülstufe, so dass nicht nur der Wasser- und Energieverbrauch, sondern auch der Chemikalienverbrauch maßgebend reduziert wird.

Ein Teilstrom 13' wird zur Absalzung aus der Abwasser-Rückführleitung 13 ausgeschleust. Weiters kann zur Desinfektion des Abwassers noch eine UV-Desinfektionsvorrichtung 10 vorgesehen sein.

Unter Berücksichtigung einer Verdunstung in der Geschirrspülmaschine kann der Trinkwasserbedarf bei dem gezeigten Ausführungsbeispiel um ca. 67% veringert werden, sowie der Chemikalienverbrauch in der Reinigungsstufe 1 um bis zu 95% und in der Spülstufe 2 um bis zu 94% reduziert werden, da durch die Rückführung der gefilterten Reinigungslösung eine Verschleppung von etwaigen Klarspülmitteln in die Reinigungsstufe hintangehalten wird.

Die Reduktion des Trinkwasserbedarfs durch die Filtrierung der Reinigungslösung und deren Rückführung in die Reinigungsstufe wird noch anhand des nachfolgenden Vergleichsbeispiels verdeutlicht.

In einer typischen Band- oder Korbmaschine fällt beispielsweise pro Stunde ein Trinkwasser-Durchlauf von etwa 300 l an. Bei bekannten Geschirrspülmaschinen muss dieses Wasser, das vorerst aufwendig entsalzt werden muss, vollständig ersetzt werden, d.h. die volle Zulaufmenge, die gegebenenfalls mit einem Klarspülmittel versetzt wird, wird zum Spülen genutzt und dann kaskadisch den davor liegenden Behandlungsschritten im Geschirrspüler zugeführt.

Der einfache Kaskadendurchlauf ohne weitere Reinigungsschritte in der Maschine ist jedoch nicht geeignet, die Maschine länger als ein paar Stunden, bis zu einer Arbeitsschicht, in Betrieb zu halten, ohne den Maschineninhalt zu verwerfen um ein akzeptables Geschirrspülergebnis zu erreichen.

Bei dem erfindungsgemäßen Reinigungssystem bzw. dem entsprechenden Verfahren hingegen ergibt sich unter Zugrundelegung der 300 l/h etwa folgender Massenstrom:

| | | |
|---|---|---|
| 1) | Konzentrat aus der Ultrafiltration | 6 l/h (ca. 2%) |
| 2) | Absalzwasser aus dem Klarspüler | 12 l/h (ca. 4%) |
| 3) | Verdunstungsverluste (kann durch Rück-kondensation noch verringert werden) | 50 l/h ((ca. 17%) |
| | Gesamt Frischwasserbedarf | 68 l/h (ca. 23%) |
| | (alle % Angaben als Masse % des Umlaufs) | |

Die Ersparnis gegenüber herkömmlichen Verfahren zeigt sich über einer Arbeitsschicht

| | | | |
|---|---|---|---|
| 1 | Maschinenfüllung | | 300 l |
| 7 | Stunden Betrieb netto 7x3001 | | 2.100 l |
| 1 | Stunde Totzeit, Reinigung etc. | | |
| | | Verbrauch | 2.400 l |
| | | Abwasser (pH12) | 2.050 l |

Nach Anwendung des erfindungsgemäßen Verfahrens, reduziert sich der Aufwand und erhöht sich die Effektivität:

| | |
|---|---|
| 7,5 Stunden Betrieb netto 7,5x68 l/h | 510 l |
| 0,5 Stunden Totzeit, Reingung, etc. | |
| Abwasser (pH 8,5) | 90 l |
| Konzentrat Abwasser (pH 12) | 45 l |

Selbstverständlich kann das erfindungsgemäße Verfahren bzw. das entsprechende Reinigungssystem auch zur Reinigung anderer Gegenstände wie beispielsweise Kraftfahrzeugen, Wäsche und dgl. eingesetzt werden, wesentlich ist lediglich, dass die Reinigungslösung (ultra)filtriert wird und in die Reinigungsstufe zurückgeführt wird, um somit den Brauchwasserverbrauch zu reduzieren.

## Patentansprüche

1. Verfahren zum Reinigen von Gegenständen, insbesondere von Geschirr, Wäsche, Kraftfahrzeugen, mit einer Reinigungsstufe (1)und einer Spülstufe (2), wobei die zu reinigenden Gegenstände in der Reinigungsstufe (1) zunächst einer wässrigen Reinigungslösung ausgesetzt werden, und anschließend in der Spülstufe (2) mit Brauchwasser, insbesondere Trinkwasser, gegebenenfalls unter Zugabe von Spülmittel, gespült werden, welches von der Spülstufe (2) in die Reinigungsstufe (1) weitertransportiert wird, **dadurch gekennzeichnet, dass** die verbrauchte Reinigungslösung der Reinigungsstufe (1) gefiltert wird, inbesondere ultrafiltriert wird, und die filtrierte Reinigungslösung in die Reinigungsstufe (1) rückgeführt wird.

2. Verfahren nach Anspruch 1, **dadurch gekennzeichnet, dass** die zu reinigenden Gegenstände von der Reinigungsstufe (1) in die Spülstufe (2) gefördert werden.

3. Verfahren nach Anspruch 1 oder 2, **dadurch gekennzeichnet, dass** das Brauchwasser von der Spülstufe (2) in die Reinigungsstufe (1) kaskadisch weitertransportiert wird.

4. Verfahren nach einem der Ansprüche 1 bis 3, **dadurch gekennzeichnet, dass** Abwasser, das in der Spülstufe (2) anfällt, zu Brauchwasser, insbesondere Trinkwasser, aufbereitet wird, und in die Spülstufe (2) rückgeführt wird.

5. Verfahren nach Anspruch 4, **dadurch gekennzeichnet, dass** das Abwasser vor dem Rückführen in die Spülstufe (2), z.B. mittels gasförmigem CO₂, neutralisiert wird.

6. Verfahren nach Anspruch 4 oder 5, **dadurch gekennzeichnet, dass** das Abwasser teilweise aus der Abwasser-Rückführleitung (13) ausgeschleust wird.

7. Verfahren nach einem der Ansprüche 4 bis 6, **dadurch gekennzeichnet, dass** das Abwasser vor dem Rückführen in die Spülstufe (2) mittels UV-Bestrahlung desinfiziert wird.

8. Verfahren nach einem der Ansprüche 1 bis 7, **dadurch gekennzeichnet, dass** das Brauchwasser, insbesondere Trinkwasser, vor einem Einbringen in die Spülstufe (2), vorzugweise auf über 60°C, inbesondere auf im Wesentlichen 85°C, erhitzt wird.

9. Verfahren nach einem der Ansprüche 1 bis 8, **dadurch gekennzeichnet, dass** als wässrige Reinigungslösung eine alkalische, saure oder auf Enzymen basierende Lösung vorgesehen ist.

10. Verfahren nach einem der Ansprüche 1 bis 9, **dadurch gekennzeichnet, dass** die Reinigungslösung einen pH-Wert größer 10, vorzugsweise von im Wesentlichen 12, aufweist.

11. Verfahren nach einem der Ansprüche 1 bis 10, **dadurch gekennzeichnet, dass** das Retentat der Filtration im Kreis geführt wird und teilweise ausgeschleust wird.

12. Verfahren nach einem der Ansprüche 1 bis 11, **dadurch gekennzeichnet, dass** die in der Reinigungungsstufe (1) verbrauchte Reinigungslösung vor dem Rückführen in die Reinigungsstufe (1) mittels UV-Bestrahlung desinfiziert wird.

13. Verfahren nach einem der Ansprüche 1 bis 12, **dadurch gekennzeichnet, dass** der in der Reinigungungsstufe (2) verbrauchten Reinigungslösung vor dem Rückführen in die Reinungungsstufe (2) zur Verringerung des TOC(Total Organic Carbon)-Gehalts Ozon zugeführt wird.

14. Reinigunssystem zum Reinigen von Gegenständen, insbesondere von Geschirr, Wäsche, Kraftfahrzeugen, mit einer Reinigungsstufe (1) und einer nachfolgenden Spülstufe (2), wobei in der Reinigungsstufe (1) zumindest ein Reinigungsbehälter (4) vorgesehen ist, der eine wässrige Reinigungslösung enthält, und in der Spülstufe (2) zumindest ein Spülbehälter (12) vorgesehen ist, in den Brauchwasser, insbesondere Trinkwasser, gegebenenfalls unter Zugabe von Spülmittel eingeleitet wird, und das Brauchwasser von der Spülstufe (2) in die Reinigungsstufe (1) weitertransportiert wird, **dadurch gekennzeichnet, dass** die Reinigungsstufe (1) eine Reinigungslösung-Rückführleitung (9) aufweist, in der eine Filtervorrichtung (8), insbesondere ein Ultrafilter, vorgesehen ist, wobei die Reinigungslösung-Rückführleitung (9) an die Permeatseite der Filtervorrichtung (8) angeschlossen ist und mit dem Reinigungsbehälter (4) in Verbindung ist.

15. Reinigungssystem nach Anspruch 14, **dadurch gekennzeichnet, dass** eine Fördereinrichtung (3) zum Transport der zu reinigenden Gegenstände von der Reinigungsstufe (1) in die Spülstufe (2) vorgesehen ist.

16. Reinigungssystem nach Anspruch 14 oder 15, **dadurch gekennzeichnet, dass** der Spülbehälter (12) und der Reinigungsbehälter (4) über einen Überlauf in Verbindung stehen.

17. Reinigungssystem nach einem der Ansprüche 14 bis 16, **dadurch gekennzeichnet, dass** die Spülstufe eine Abwasser-Rückführleitung zum Zurückführen von zu Brauchwasser, insbesondere zu Trinkwasser, aufbereitetem Abwasser in den Spülbehälter aufweist.

18. Reinigungssystem nach einem der Ansprüche 14 bis 17, **dadurch gekennzeichnet, dass** die Reinigungsstufe (1) mehrere hintereinander angeordnete Reinigungsbehälter (4) aufweist, wobei der Reinigungslösung-Rückführleitung (9) in Förderrichtung (3') gesehen mit dem letzten Reinigungsbehälter (4) in Verbindung steht.

19. Reinigungssystem nach einem der Ansprüche 14 bis 18, **dadurch gekennzeichnet, dass** die Filtervorrichtung (8) zumindest eine organische oder anorganische Membran aufweist, vorzugsweise mit einer Membranschicht aus Zirkonoxid oder Titanoxid auf einem Trägermaterial, das insbesondere aus Carbon oder Aluminiumoxid, insbesondere α-Aluminiumoxid, besteht.

20. Reinigungssystem nach Anspruch 19, **dadurch gekennzeichnet, dass** zumindest eine Membranschicht rohrförmig mit einem Innendurchmesser von 2 bis 17 mm, vorzugsweise von im Wesentlichen 6 mm, oder kreissegmentförmig mit einer entsprechenden Querschnittsfläche ist.

21. Reinigungssystem nach einem der Ansprüche 14 bis 20, **dadurch gekennzeichnet, dass** die Filtervorrichtung (8) eine Trenngrenze von 5000 bis 150000 Dalton, vorzugsweise von im Wesentlichen 50000 Dalton aufweist.

22. Reinigungssystem nach einem der Ansprüche 14 bis 21, **dadurch gekennzeichnet, dass** einem Umlauftank (7) zumindest ein Schmutzsieb (6), insbesondere zwei parallel zueinander angeordnete, wahlweise durchströmte Schmutzsiebe, vorgeschaltet ist bzw. sind.
